# EUROPEAN PATENT APPLICATION

(11) **EP 3 879 605 A1**
(43) Date of publication of application: **15.09.2021**
(21) Application number: 19888193.0
(22) Date of filing: 21.11.2019
(51) Int. Cl.: H01M 4/36

(54) **SILICON OXYGEN COMPOSITE NEGATIVE ELECTRODE MATERIAL AND FABRICATION METHOD THEREFOR**

(30) Priority: 24.11.2018 CN 201811411351; 05.12.2018 CN 201811481527
(71) Applicant: Huawei Technologies Co., Ltd., Longgang District Shenzhen, Guangdong 518129 (CN)
(72) Inventor: SHA, Yujing, Shenzhen, Guangdong 518129 (CN); XIA, Shengan, Shenzhen, Guangdong 518129 (CN); WANG, Pinghua, Shenzhen, Guangdong 518129 (CN)
(74) Representative: Maiwald Patent- und Rechtsanwaltsgesellschaft mbH
(86) International application number: PCT/CN2019/120043
(87) International publication number: WO 2020/103914

(57) **Abstract**

A silicon-oxygen composite anode material is used to fabricate an anode of a lithium battery in an electric vehicle, a smart vehicle, or a terminal. The anode material includes a kernel, a coating layer wrapped outside the kernel, and an intermediate layer located between the kernel and the coating layer. The intermediate layer includes the non-lithium silicate, and mass content of the non-lithium silicate in the intermediate layer progressively decreases from the intermediate layer to the kernel. The progressive decrease includes a gradient decrease from the intermediate layer to the kernel. The gradient decrease refers to that mass proportions on a circumference with a same distance from a center of the kernel are the same, and the mass proportion decreases gradually as the distance from the center of the kernel decreases. The non-lithium silicate is generated in situ at an outer layer of the kernel, and has a non-water-soluble, non-alkaline, or weak-alkaline dense structure. This can effectively relieve dissolution of an internal water-soluble lithium silicate, and reduce a pH value of the silicon-oxygen composite anode material.

## Description

### TECHNICAL FIELD

The present invention relates to the field of secondary battery technologies, and in particular, to a silicon-oxygen composite anode material and a fabrication method thereof.

### BACKGROUND

Conventional graphite anode materials are widely used in commercial lithium-ion batteries. However, a theoretical specific capacity of the conventional graphite anode materials is only 372 mAh/g, which is relatively low. This limits application of a pure graphite anode in high-energy-density and long-cycle battery development. Therefore, people turn their attention to silicon-based and tin-based anode materials with higher capacities. In a silicon-based material, an initial discharge capacity of a silicon oxide material is 2615 mAh/g. This is much lower than a theoretical discharge capacity 4200 mAh/g of monatomic silicon, but is still far higher than that of a conventional graphite anode. Compared with lithium intercalation/deintercalation volume expansion 300% of the monatomic silicon, volume expansion of silicon oxide is only 160%.

In addition, the silicon oxide may form irreversible lithium oxide (Li₂O) and lithium silicate (LiₓSi_{y}O_{z}) by-products in a lithium ion embedding process. The by-products may be used as a natural buffer layer to relieve volume expansion of silicon-lithium alloy LiₓSi during the lithium ion embedding process, and avoid problems such as particle breakage caused by excessive expansion of a silicon material, instability of an SEI film on a material surface, continuous consumption of active lithium ions in an electrolyte, and fast decay of a final cycle life. Therefore, a cycle life and a capacity retention rate of a battery using the silicon oxide as an anode are usually higher than those of a battery with a common silicon carbon material as an anode.

However, in a process in which lithium is embedded into the battery during first charging of the battery, the silicon oxide absorbs lithium ions, and forms by-products including lithium oxide and lithium silicate. The lithium ions absorbed during the charging process cannot be completely removed from the by-products during a discharging process. This irreversible reaction causes loss of a large quantity of active lithium ions in the battery, forming an irreversible capacity. Therefore, initial coulombic efficiency of a conventional silicon oxide anode is less than 80%, and initial coulombic efficiency of a cathode material is generally greater than 85%. However, when the cathode material matches an anode material, lithium ions provided in the cathode material are sacrificed at the anode to form the irreversible capacity. Consequently, a cathode specific capacity is not fully utilized, and an overall capacity and energy density of the battery are affected. Therefore, how to improve the initial coulombic efficiency of the anode material silicon oxide is a problem that urgently needs to be resolved at present.

### SUMMARY

In view of this, embodiments of the present invention provide a silicon-oxygen composite anode material and a fabrication method thereof. This can effectively resolve a problem of low initial coulombic efficiency of an existing silicon-oxygen composite anode material.

According to the embodiments of the present invention, a silicon-oxygen composite anode material is provided, and is used to make an anode of a lithium battery. The anode material includes a kernel, a coating layer wrapped outside the kernel, and an intermediate layer located between the kernel and the coating layer. The intermediate layer includes the non-lithium silicate, and mass content of the non-lithium silicate in the intermediate layer progressively decreases from the intermediate layer to the kernel. The progressive decrease includes a gradient decrease from the intermediate layer to the kernel. The gradient decrease refers to that mass proportions on a circumference with a same distance from a center of the kernel are the same, and the mass proportion decreases gradually as the distance from the center of the kernel decreases.

The non-lithium silicate is generated in situ at an outer layer of the kernel, and has a non-water-soluble, non-alkaline, or weak-alkaline dense structure. This can effectively relieve dissolution of internal water-soluble lithium silicate, and reduce a pH value of the silicon-oxygen composite anode material.

A gradient structure is designed for silicate, to decrease the pH value of the composite anode material. Therefore, processing performance of the composite anode material can be maintained, and both electrochemical performance and processing stability of the material can be considered.

The intermediate layer further includes silicon oxide, a chemical formula of the silicon oxide is SiOₓ, where 0.6≤x≤2, x is an independent variable in the chemical formula SiOₓ, and mass content of the silicon oxide is opposite to that of the non-lithium silicate.

The kernel includes a mixture of nano-silicon, silicon oxide, and lithium silicate, mass content of the silicon oxide in the entire kernel increases in a gradient manner in a radial direction from the coating layer to the kernel, and mass content of the lithium silicate in the kernel decreases in a gradient manner from the coating layer to the kernel.

In the partial lithium-doped silicon oxide structure, content of the nano-silicon and the silicate progressively decreases from outside to inside, and content of the silicon oxide progressively increases from outside to inside. This gradient structure can prevent excessive content of the nano-silicon generated in a material kernel due to doping reaction, effectively reduce stress borne by the kernel in a charging and discharging process, and avoid breaking the kernel due to a long cycle.

A plurality of pores are disposed on the kernel and the intermediate layer. The pore extends from a surface of the intermediate layer to inside, the pore forms a tapered hole shape, and an aperture of the pore gradually shrinks from the surface of the intermediate layer to the inner 1 center.

The "horn-shaped" pore structure that extends from a surface of particles of a material to a kernel direction and that is not fully connected can effectively relieve expansion of an outer layer of high-initial-efficiency silicon oxide particles in the charging and discharging process. In addition, a fully connected structure is not formed between the pores. This can prevent structure collapse and performance deterioration caused by excessive side reactions between an electrolyte and the material due to a deep pore. In addition, a multi-lithium ion diffusion channel provided by the porous structure can improve a fast charging capability of the material.

The intermediate layer is a mixture layer generated by introducing a non-lithium metal salt on a surface of the kernel. The non-lithium silicate is generated in situ on the surface of the kernel material, and can ensure stability of a material structure. In addition, the non-water-soluble/non-alkaline/weak-alkaline dense structure can effectively relieve the dissolution of the internal water-soluble lithium silicate, and reduce the pH value of the material.

The coating layer is made of a carbon material, and the carbon material is purely amorphous carbon, or the carbon material is a mixture of the amorphous carbon and a carbon nanotube or graphene that are embedded in the amorphous carbon.

The coating layer includes a coating layer that may be further formed by organic polymerization or polymer dispersion coating, and a thickness of the coating layer is 2 nm to 200 nm.

The carbon coating layer or the organic polymer coating layer can increase an electronic conductance of the material, and a coating layer structure can prevent the electrolyte from directly contacting an active material to generate excessive surface side reactions, to reduce an irreversible capacity and a loss of lithium ions in a battery. In addition, the coating layer can suppress, to some extent, expansion and contraction of the material in the charging and discharging process, comprehensively improving cycle performance of the battery.

### BRIEF DESCRIPTION OF DRAWINGS

FIG. 1 is a structural diagram of a battery using a silicon-oxygen composite anode material according to an embodiment of the present invention;
FIG. 2 is a schematic structural diagram of an oxygen composite anode material according to a first embodiment of the present invention;
FIG. 3 is a component mass concentration distribution diagram of the silicon-oxygen composite anode material according to the first embodiment of the present invention;
FIG. 4 is a tangent-plane electron microscope diagram of a sample of the silicon-oxygen composite anode material according to the first embodiment of the present invention;
FIG. 5 is a schematic diagram of a porous structure of a silicon-oxygen composite anode material according to a second embodiment of the present invention;
FIG. 6 is a flowchart of fabricating a silicon-oxygen composite anode material according to a method embodiment of the present invention;
FIG. 7 is a surface electron microscope diagram of the silicon-oxygen composite anode material according to the second embodiment of the present invention; and
FIG. 8 is a cycle data diagram of testing a battery fabricated by a silicon-oxygen composite anode material according to various embodiments.

### DESCRIPTION OF EMBODIMENTS

The following describes embodiments of the present invention with reference to accompanying drawings in the embodiments of the present invention.

The embodiments of the present invention mainly relate to a new silicon-oxygen composite anode material. The material is used to fabricate an anode of a lithium battery. The lithium battery is mainly used in consumer products, for example, various mobile phones, tablet computers, laptop computers, and other wearable or movable electronic devices.

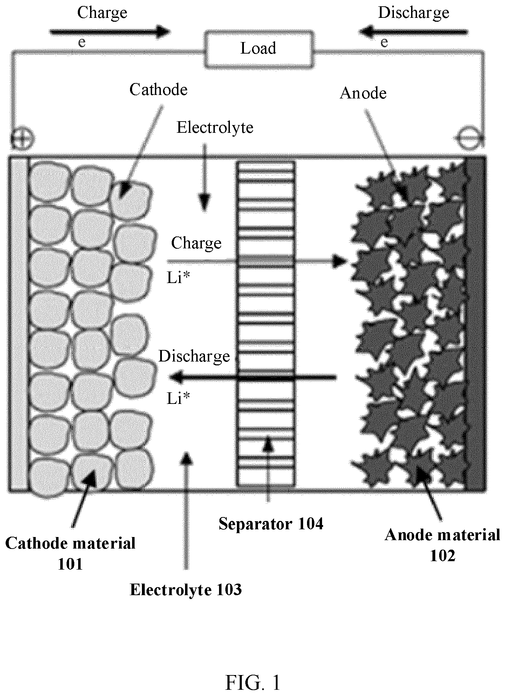

As shown in FIG. 1, core components of the lithium battery include a cathode material 101, an anode material 102, an electrolyte 103, a separator 104, and a corresponding connecting accessory and loop. The cathode material and the anode material may deintercalate lithium ions to implement energy storage and release. The electrolyte is a carrier for transmitting the lithium ions between a cathode and an anode. The separator is permeable to the lithium ions but is nonconductive, so as to separate the cathode and the anode and prevent a short circuit. The cathode and anode material generally play a decisive role in key performance factors such as an energy storage function of the lithium battery, energy density of an electrochemical cell of the lithium battery, cycle performance, and safety.

The anode material in the embodiments of the present invention focuses on a silicon oxide composite anode material having a high specific capacity (mAh/g). A crystal structure of the material is changed by using lithium-doped lithium silicate, to reduce an irreversible reaction, thereby improving initial coulombic efficiency of a silicon oxide material while maintaining a relatively high specific capacity of the silicon oxide material, and achieving an objective of improving the energy density of the electrochemical cell.

At the same time, a gradient structure is designed for a kernel and silicate, to decrease a pH value of the composite anode material. Therefore, processing performance of the composite anode material can be maintained, and both electrochemical performance and processing stability of the material can be considered. In addition, a surface of the composite anode material in the embodiments of the present invention has a radial tampered-hole structure. This can relieve volume expansion of the material in a charging and discharging process and provide more lithium ion transmission channels, thereby facilitating improvement of a long cycle life of the battery, and improving overall competitiveness of a product.

### 1. Material embodiment

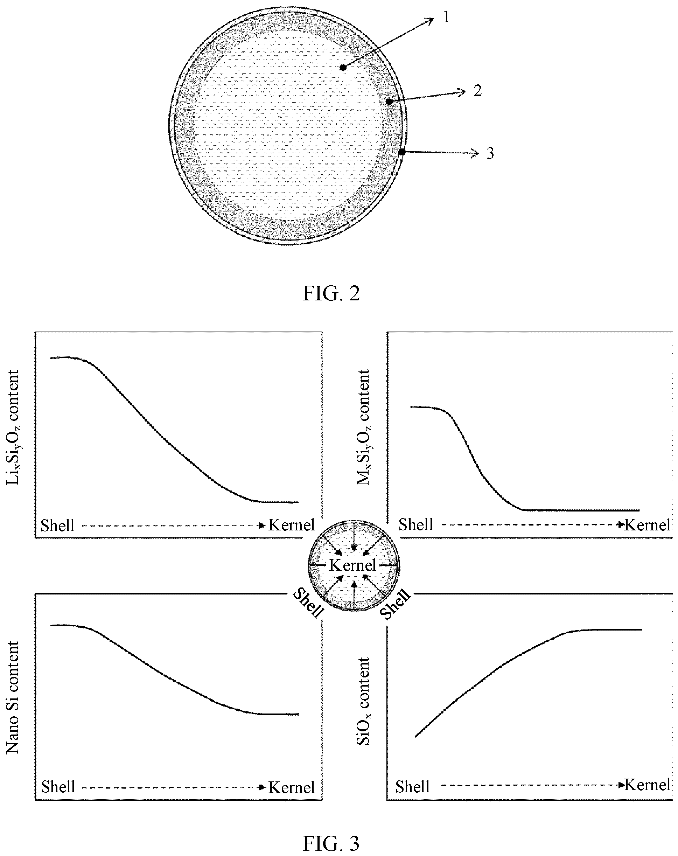

As shown in FIG. 2, according to a first embodiment of the present invention, a silicon-oxygen composite anode material includes a kernel 1, a coating layer 3 wrapped outside the kernel 1, and an intermediate layer 2 located between the kernel 1 and the coating layer 3.

The kernel 1 is a lithium-doped silicon oxide kernel. The lithium-doped silicon oxide kernel is a mixture including a plurality of materials. The kernel 1 includes a mixture of nano-silicon (nano Si), silicon oxide, and lithium silicate. A particle radius r of the mixture ranges from 50 nm to 20 um.

A chemical formula of the silicon oxide is SiOₓ, where 0.6≤x≤2, and x is an independent variable in the chemical formula SiOₓ, and has no association relationship with x in another chemical formula. A subscript variable used in the following chemical formula to indicate a molecular ratio has the same principle as x. A same letter such as x or y in different chemical formulas has no association relationship, but is not distinguished for ease of description. As shown in FIG. 3, mass content of the silicon oxide in the entire kernel progressively increases in a radial direction from the coating layer 3 to the kernel 2, and a shell in FIG. 3 refers to the coating layer 3. The progressive increase may be a gradient increase. For example, the gradient increase may refer to that mass proportions on a circumference with a same distance from a center of the silicon-oxygen composite anode material are the same, and the mass proportion changes gradually or progressively as the distance from the center of the silicon-oxygen composite anode material changes.

A chemical formula of the lithium silicate is Li₂ₓSi_{y}O_{(x+2y)}. The lithium silicate is a product formed after a lithium is doped with the silicon oxide, and is a mixture of a plurality of silicates. Composition of the lithium silicate includes but is not limited to Li₄SiO₄, Li₂SiO₃, Li₂Si₂O₅, and the like. Mass content of the lithium silicate in the kernel 1 decreases in a gradient manner from the coating layer 3 to the kernel 1. In other words, a mass proportion of the lithium silicate at an outermost layer of the kernel 1 is the highest, and then decreases layer by layer toward a center of the kernel 1.

In addition, the kernel 1 and the intermediate layer 2 further include nonmetallic doping elements such as C, H, N, B, P, S, Cl, and F, and the nonmetallic doping elements are distributed in the kernel 1 in a gradient manner, and the gradient distribution is progressively decreasing from outside of the intermediate layer 2 to the kernel 1.

The nonmetallic elements such as C, H, N, B, P, S, Cl, and F exist in any one or more compounds of a mixture of the kernel 1 and the intermediate layer 2 in a doping form, and a molar ratio of the doping elements to a doped material is less than 5%.

The gradient distribution is based on a diffusion principle. When the kernel 1 is being fabricated, a quantity of added lithium sources and a synthesis temperature are controlled. A concentration of the lithium sources in a material decreases in a gradient manner from outside to inside. Therefore, content of the nano-silicon and the silicate in the kernel 1 progressively decreases from outside to inside, and content of the silicon oxide in the kernel 1 progressively increases from outside to inside. A kernel structure distributed in the gradient manner can prevent excessive content of the nano-silicon generated in a material kernel due to doping reaction, effectively reduce stress borne by the kernel in a charging and discharging process, and avoid breaking the kernel due to a long cycle. In addition, a lithium-doped component of the silicon-oxygen composite anode material is mainly included in the lithium silicate and a nano-lithium, and mass content of the lithium-doped component in the kernel 1 decreases in a gradient manner from the coating layer 3 to the kernel 1. In other words, a mass proportion of the lithium-doped component at an outermost layer of the kernel 1 is the highest, and then decreases layer by layer toward the center of the kernel 1.

The intermediate layer 2 generates in situ non-lithium silicate on a surface of the kernel 1, that is, the intermediate layer 2 is a mixture layer generated by introducing a non-lithium metal salt on the surface of the kernel 1 to react. The intermediate layer 2 includes the non-lithium silicate, the nano-silicon, the silicon oxide, and the lithium silicate. The non-lithium silicate refers to doped metal silicate in addition to the lithium silicate. A chemical formula of the non-lithium silicate is MₓSi_{y}O_{z}. The M includes one or a combination of metal elements such as Al, Ca, Mg, Be, Sr, Ba and Ti. As shown in FIG. 3, mass content of the non-lithium silicate in the intermediate layer 2 decreases in a gradient manner from the coating layer 3 to the kernel 1. In other words, a mass proportion of the non-lithium silicate at an outermost layer of the intermediate layer 2 is the highest, and then a mass proportion of the non-lithium silicate closer to the center of the kernel 1 is lower in an entire intermediate layer 2. The shell shown in the figure refers to the coating layer 3. Concentration distribution of the M elements and concentration distribution of the non-lithium silicate are consistent. The non-lithium silicate is generated in situ at an outer layer of the kernel 1, and has a non-water-soluble, non-alkaline, or weak-alkaline dense structure. This can effectively relieve dissolution of an internal water-soluble lithium silicate, and reduce a pH value of the silicon-oxygen composite anode material. The intermediate layer 2 further includes the silicon oxide, a chemical formula of the silicon oxide is SiOₓ, where 0.6≤x≤2, x is an independent variable in the chemical formula SiOₓ, and mass content distribution of the silicon oxide is opposite to that of the non-lithium silicate. Mass content of the silicon oxide in the intermediate layer 2 increases in a gradient manner from the coating layer 3 to the kernel 1. In other words, a mass proportion of the non-lithium silicate at the outermost layer of the intermediate layer 2 is the lowest, and then a mass proportion of the non-lithium silicate closer to the center of the kernel 1 is higher in the entire intermediate layer 2. The intermediate layer also includes a mixture of the nano silicon, the silicon oxide, and the lithium silicate.

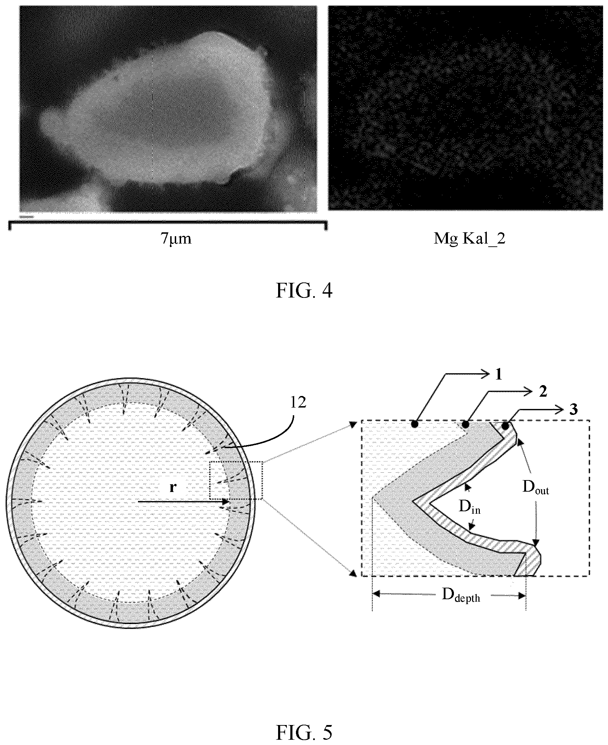

FIG. 4 shows a tangent-plane secondary electron image of a sample of the silicon-oxygen composite anode material and a distribution diagram of an element Mg (when M in MₓSi_{y}O_{z} is Mg). Structure distribution inside the sample may be observed in the tangent-plane image. FIG. 4 is an electron microscope diagram obtained through secondary electron imaging and double electron imaging, and is mainly used to observe a surface micromorphology or surface element distribution. In the tangent-plane image of the sample, a light gray part and a dark gray part are distinct. The light gray part is non-lithium silicate Mg2SiO4 generated in situ on a surface of a partial lithium-doped silicon oxide. It can be seen that distribution of Mg elements in a right part of FIG. 4 is consistent with a contour of a left part. It can be seen from the right part that, a concentration of Mg progressively decreases in a gradient manner from an outer layer to the kernel area.

The coating layer 3 is not a mandatory composition of the silicon-oxygen composite anode material in this embodiment of the present invention. In some embodiments, the coating layer 3 may not exist. In some embodiments, the coating layer 3 is made of a carbon material, a coating layer structure is formed at an outermost layer of the silicon-oxygen composite anode material, and a thickness of the coating layer may be 2 nm to 1000 nm. The carbon material is an amorphous carbon formed by cracking a carbon source, or is a mixture of the amorphous carbon and a carbon nanotube or/and graphene embedded in the amorphous carbon. The coating layer 3 may be a carbon material and/or organic polymer coating layer. The carbon material coating layer can increase electronic conductance of the material. In addition, a coating layer structure can prevent an electrolyte from directly contacting an active material to generate excessive surface side reactions, to reduce an irreversible capacity and a loss of lithium ions in a battery.

As shown in FIG. 5, according to a second embodiment of the present invention, in a silicon-oxygen composite anode material silicon-oxygen composite anode material, a porous structure is further disposed on the kernel 1 and the intermediate layer 2. A plurality of pores 12 are disposed on the silicon-oxygen composite anode material. The pore 12 extends from a surface of the intermediate layer 2 to inside. The pore 12 forms a tapered hole shape. An aperture of the pore 12 gradually shrinks from the surface of the intermediate layer 2 to a center of the kernel 1. In other words, the aperture decreases in a gradient manner from the surface of the intermediate layer 2 to the kernel 1. For example, an aperture of the opening of the pore 12 on the surface of the intermediate layer 2 is greater than an aperture located at the kernel 1, that is, Dₒᵤₜ > Dᵢₙ, and a depth of the pore 12 is less than the particle radius r of the mixture of the kernel 1, that is, D_{depth} < r, and 10 nm < D_{depth} < 500 nm.

In some embodiments, openings of the pores 12 are uniformly distributed on a surface of the intermediate layer 2, and each pore 12 extends radially along the surface of the intermediate layer 2 towards a center of the kernel 1.

Because a structural feature of the gradient lithium-doped silicon oxide in the kernel 1 is that a doping concentration progressively decreases in a direction from a surface to an axis of the particles, and nano-Si particles are distributed most on the surface of the kernel 1. A porous structure is design to be derived from the intermediate layer 2 and the surface of the kernel 1 to the direction of the axis, to relieve expansion of an outer layer of high-initial-efficiency silicon oxide particles in a charging and discharging process. In addition, a fully connected structure is not formed between the pores 12. This can prevent structure collapse and performance attenuation caused by excessive side reactions between an electrolyte and a material due to a deep pore 12. In addition, the porous structure provides more lithium ion diffusion channels. This can improve a fast charging capability of the material.

In a third embodiment of the present invention, the coating layer 3 includes a polymer coating layer formed by organic polymerization or polymer dispersion coating.

In a fourth embodiment of the present invention, the polymer coating layer 3 not only wraps a surface of the intermediate layer 2, but also fully fills all the pores 12 in the kernel 1 and the intermediate layer 2. In some embodiments, the coating layer 3 fills only a part of the pores 12.

In a fifth embodiment of the present invention, the polymer coating layer 3 directly wraps a surface of the kernel 1, and fully fills all the pores 12 of the kernel 1. In some embodiments, the coating layer 3 fills only a part of the pores 12.

### 2. Method embodiment

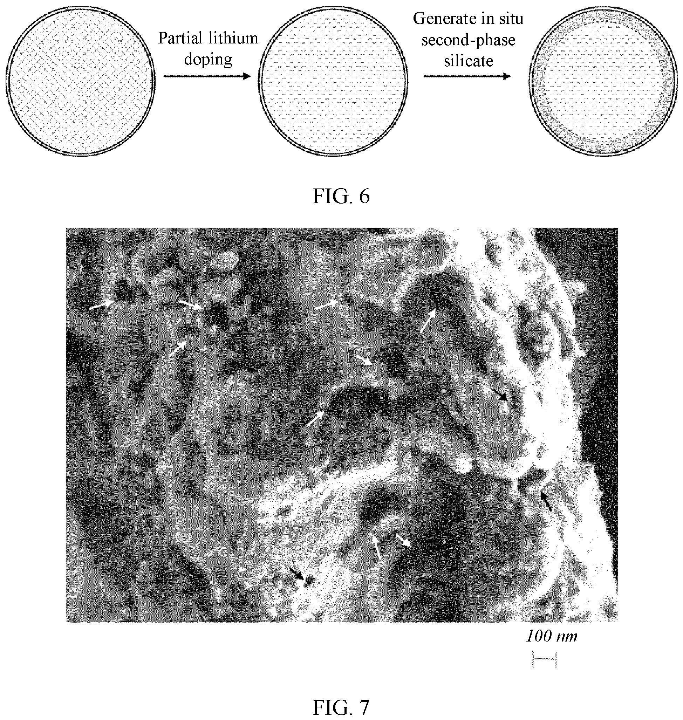

As shown in FIG. 6, according to a method embodiment of the present invention, a method for fabricating the silicon-oxygen composite anode material in the first embodiment is provided. The fabrication method mainly includes the following steps:
Step 1: Preparation of partial lithium-doped silicon oxide: Evenly mix silicon oxide and lithium sources based on a specific proportion and then transfer the mixture to a saggar, and perform roasting in an inert atmosphere or a reducing atmosphere.

Specifically, the silicon oxide and the lithium sources are mixed evenly based on the specific proportion and then transferred to the saggar (0.1 ≤ n_{Li}/n_{Si} ≤ 1.0, where n_{Li}/n_{Si} is a molar ratio between a lithium ion and the silicon oxide). Then, the saggar is transferred to a high-temperature furnace with the inert atmosphere or the reducing atmosphere for roast reaction, where a roasting temperature ranges from 300°C to 900°C, to obtain the partial lithium-doped silicon oxide, namely, a mixture of lithium silicate and the silicon oxide. The lithium source used in the lithium doping is a lithium salt, and the lithium salt mainly includes one or more of LiH, LiAlH₄, Li₂CO₃, LiNO₃, LiAc, and LiOH.

Step 2: Synthesize in situ non-lithium silicate: Evenly mix the partial lithium-doped silicon oxide and a non-lithium metal or metal salt based on a specific proportion to roast.

Specifically, the partial lithium-doped silicon oxide and the non-lithium metal or metal salt are evenly mixed based on a specific proportion to obtain a mixture. The mixture is transferred to the saggar to enter the high-temperature furnace with the inert atmosphere or the reducing atmosphere, and is roasted in a temperature range of 400°C to 1000°C to generate in situ the non-lithium silicate on a surface of the partial lithium-doped silicon oxide or the partial lithium-doped porous silicon oxide. Then, a lithium-doped silicon oxide composite material with a layered structure and gradient distribution is obtained. The layered structure refers to a structure in which the lithium-doped silicon oxide composite material includes the kernel 1 and the intermediate layer 2 in the foregoing embodiment.

A structural formula of the non-lithium silicate is MₓSi_{y}O_{z}, the M includes but is not limited to one or more of metal elements such as Al, Ca, Mg, Be, Sr, Ba, Ti and Zr, and the M further includes but is not limited to the metal elements or a metal salt as mentioned above. A molar ratio of the metal element M and Si meets 0.01 ≤ n_{M}/n_{Si} ≤ 0.3.

Step 3: Secondary coating of a carbon material: Put the lithium-doped silicon oxide composite material synthesized in step 2 into the inert atmosphere furnace, pump into organic carbon source gas, and crack at a high temperature, to form a carbon coating layer on a surface of the lithium-doped silicon oxide composite material.

Specifically, the lithium-doped silicon oxide composite material synthesized in step 2 is put into the inert atmosphere furnace, the organic carbon source gas is pumped into the furnace, and a carbon source cracks at a temperature of 400°C to 1100°C, thereby forming the carbon coating layer on the surface of the lithium-doped silicon oxide composite material.

A step of coating the carbon material includes but is not limited to the foregoing gas organic carbon source cracking reaction, or may be solid-phase mixed carbon source coating, asphalt coating, hydrothermal reaction coating, oil bath coating, or the like, or may be resin, sugar, oil, organic acid, organic acid ester, small molecular alcohol, carbon nanotube, graphene, or the like, but the carbon source is not a gaseous organic carbon source. A thickness of the coating layer is 2 nm to 1000 nm.

According to another method embodiment of the present invention, a method for fabricating the porous silicon-oxygen composite anode material in the second embodiment is provided. The fabrication method mainly includes the following steps:

### Step 1: Preparation of partial lithium-doped silicon oxide:

Mix, at a mass ratio of 100: (8-10), silicon oxide SiOx (x=1) that is with a surface carbon coating amount of 4.3% and that is with an average particle size of 5 µm and a lithium hydride LiH used as a lithium source, to obtain a mixture. The mixture needs to be mixed in an argon atmosphere by using a mixer for at least 20 minutes to ensure sample uniformity; and
transfer the mixture into a saggar and transfer the saggar into an atmosphere furnace, pumped into argon, react for 2 hours at a temperature of 700°C to 800°C, cool to a room temperature, and then take out the saggar to obtain a partial lithium-doped silicon oxide material.

### Step 2: Preparation of a porous structure:

Take 500 g of the partial lithium-doped silicon oxide material prepared in step 1, add a 1 L 0.2 M NaOH aqueous solution, stir and disperse at a rotational speed of 500 r/min for 1 hour to obtain a mixed material, and perform pore-forming etching on the mixed material; perform filtration on the mixed material after the processing is completed, remove a filter cake after the filtration is completed, add 1 L water to the filter cake, stir and disperse at a rotational speed of 500 r/min for 1 hour, and then perform filtration; and wash unreacted NaOH and a reaction by-product by using water, and partially dissolve lithium silicate in remaining partial lithium-doped silicon oxide, to also form a pore structure.

In this way, operations of filtration, water addition, and filtration are repeatedly performed on the mixed material for three times, and then the filter cake is taken out and roasted in a thermal chamber at 100°C until dry, to obtain porous-structure partial lithium-doped silicon oxide.

FIG. 7 is a surface electron microscope diagram of a material. An arrow in the figure indicates that a porous structure is formed on a surface of a particle after etching and impregnation processes in this embodiment are performed on the surface of the material.

### Step 3: Generate in situ non-lithium silicate, to form gradient-structure lithium-doped silicon oxide, that is, to form a kernel 1 structure that wraps the intermediate layer 2:

Evenly mix the porous-structure partial lithium-doped silicon oxide prepared in step 2 and metal Mg powder at a high speed at a mass ratio of 100:5, roast for 1.5 hours at a temperature of 850°C in an argon atmosphere, cool to a room temperature, and then take out, to generate in situ, on the surface of the material, the gradient-structure lithium-doped silicon oxide in which the non-lithium silicate is Mg2SiO4.

### Step 4: Preparation of a carbon material coating layer:

Put the gradient-structure lithium-doped silicon oxide prepared in step 3 in an atmosphere furnace, pump into N2 to remove residual air in the furnace to ensure that the atmosphere in the furnace is an inert atmosphere, raise a furnace temperature to 850°C, pump a carbon source C2H2 into the furnace, stop pumping into carbon source gas after 1 hour of reaction, cool to the room temperature in the inert atmosphere, and finally open the furnace to take out the porous silicon-oxygen composite anode material.

In some embodiments of this application, step 5 may be further included, used to make the silicon-oxygen composite anode material into a secondary battery.

### Step 5: Preparation of a secondary battery:

Prepare a 600 mAh/g anode material obtained by mixing the silicon oxide composite anode material and commercial graphite G49, disperse, at a mass ratio of 95:0.3:3.2:1.5, the 600 mAh/g anode material, conductive agent Super P, binder SBR, and CMC in deionized water, and stir evenly to obtain electrode slurry; coat a copper foil surface and dry at 85°C to obtain an anode plate; and then use commercial lithium cobalt oxide that is used as a cathode material, an electrolyte including 1 mol/L LiPF6/EC+PC+DEC+EMC (volume ratio: 1:0.3:1:1), and a separator that is a PP/PE/PP three-layer separator and that is with a thickness of 10 um, to make a 3.7 Ah soft pack battery. The soft pack battery may be used to test full battery performance of the material.

In some method embodiments of the present invention, a method for fabricating the silicon-oxygen composite anode material in the third embodiment is provided. The coating layer 3 of the silicon-oxygen composite anode material includes a coating layer formed by organic polymerization or polymer dispersion coating.

A fabrication method of the polymer coating layer includes: dispersing 100 g the product in step 2 in the first embodiment in 300 g xylene solvent, adding 2 g uncured epoxy resin particles, stirring for 3 hours at 60°C, ultrasonically dispersing for 60 minutes, adding 0.5 g T31 curing agent, stirring for 2 hours, and spraying drying at 100°C. In this way, a gradient-structure lithium-doped silicon oxide material wrapped with the polymer organic matter can be obtained.

In some method embodiments of the present invention, a method for fabricating the silicon-oxygen composite anode material in the fourth embodiment is provided. The polymer coating layer 3 of the silicon-oxygen composite anode material not only wraps a surface of the intermediate layer 2, but also infiltrates and fully fills all pores in the kernel 1 and the intermediate layer 2.

A fabrication method of the polymer coating layer includes: dispersing 100 g the product in step 3 in the second embodiment in 300 g xylene solvent, adding 5 g uncured epoxy resin particles, stirring for 6 hours at 60°C, ultrasonically dispersing for 60 minutes, adding 2 g T31 curing agent, stirring for 2 hours, and spraying drying at 100°C. In this way, a gradient-structure lithium-doped silicon oxide material wrapped with the polymer can be obtained.

In some method embodiments of the present invention, a method for fabricating the silicon-oxygen composite anode material in the fifth embodiment is further provided. The coating layer 3 of the silicon-oxygen composite anode material directly wraps a surface of the kernel 1, and fully fills some or all pores of the kernel 1.

A fabrication method of the polymer coating layer includes: dissolving a cetyltrimethylammonium bromide (CTAB, (C16H33)N(CH3)3Br, 7.3 g) in an HCl (500 mL) solution in an ice-water bath (0-4°C), adding 100 g lithium-doped silicon oxide generated in step 1 in the first embodiment, adding pyrrole monomer (Pyrrole, 8.3 mL) to the product, ultrasonically dispersing for 30 minutes and then stirring for 2 hours, adding ammonium persulfate (APS, 13.7 g, dissolved in 100 ml 1 mol/L hydrochloric acid) solution drop by drop, keeping the solution stirred, filtrating after 24 hours of thermal insulation reaction at 0-4°C, washing an obtained grayish-green precipitate with 1 mol/L HCl solution for three times, washing the solution with pure water until the solution is colorless, and drying the precipitate at 80°C for 24 hours. In this way, a gradient-structure lithium-doped silicon oxide material wrapped with the polymer can be obtained.

Table 1 shows physical and chemical parameter comparisons between a silicon-oxygen composite anode material (Mg-Li doped SiOx) with a gradient structure in the first embodiment, a silicon-oxygen composite anode material (Porous Mg-Li doped SiOx) with a porous structure in the second embodiment, a silicon-oxygen composite anode material (Poly Mg-Li doped SiOx) with an organic coating layer in the third embodiment, a silicon-oxygen composite anode material (Poly 2 Mg-Li doped SiOx) with an organic coating layer in the fourth embodiment, a silicon-oxygen composite anode material (Poly Li doped SiOx) with an organic coating layer in the fifth embodiment, and a common partial lithium-doped silicon oxide material (Li doped SiOx) without a porous and gradient structure.

**Table 1 Comparison of basic features of all embodiments**

| Embodim ent | Material name | Specific surface area (m2/g) | pH | Slurry processing performance | Half electrode plate expansion rate | 500-week cycle retention rate |
|---|---|---|---|---|---|---|
| 1 | Mg-Li doped SiOx | 2.6 | 10.7 | Good, no obvious exception is found | 28% | 76% |
| 2 | Porous Mg-Li doped SiOx | 4.2 | 9.5 | Good, no obvious exception is found | 21% | 90% |
| 3 | Poly 1 Mg-Li doped SiOx | 3.8 | 8.5 | Good, no obvious exception is found | 22% | 90% |
| 4 | Poly 2 Mg-Li doped SiOx | 3.7 | 8.1 | Good, no obvious exception is found | 20% | 91% |
| 5 | Poly Li doped SiOx | 3.6 | 7.8 | Good, no obvious exception is found | 15% | 92% |
| 6 | Li doped SiOx | 2.8 | 11.7 | Poor, gas is generated in slurry, coating material drops easily | 30% | 66% |

It can be learned that the silicon-oxygen composite anode material with the gradient structure in the first embodiment, the silicon-oxygen composite anode material with the porous structure in the second embodiment, and the silicon-oxygen composite anode material with the organic coating layer in the third embodiment have significant advantages over the common partial lithium-doped silicon oxide material without the porous and gradient structure in material performance, especially in terms of the processing performance, the half electrode plate expansion rate, and the 500-week cycle retention rate. A detailed analysis is as follows:
1. In the first embodiment, the gradient-structure lithium-doped silicon oxide of the silicon-oxygen composite anode material generates in situ a non-lithium silicate layer that is non-water-soluble, non-alkaline, or weak-alkaline based on an original lithium-doped silicon oxide material. The non-lithium silicate layer is weak-alkaline. In addition, the composite layer can relieve solution in water of water-soluble and strong-alkaline lithium silicate in the lithium-doped silicon oxide material. This slows down the release of the lithium silicate and effectively reduces a pH value of the material. This also improves the slurry processing performance of the anode material. Problems such as gas is generated in conventional lithium-doped silicon oxide slurry, coating material drops easily have been well resolved.
2. In the second embodiment, the lithium-doped silicon oxide with a porous and gradient structure of the silicon-oxygen composite anode material is etched and impregnated before synthesis of the gradient structure material to create a radial horn pore. In a pore-making process, the water-soluble lithium silicate of a specific depth on the surface of the silicon oxide can be removed, and on the basis, a non-lithium silicate gradient structure is constructed in situ. In this way, the pH value can be better reduced. In addition, the porous structure can effectively relieve stress caused by expansion of a silicon-based material at an outer layer of silicon oxide and ensure integrity of the structure. It can be seen from experimental data in Table 1 that, the half electrode plate expansion rate of the Porous Mg-Li doped SiOx (in Embodiment 2) is 21%. This is clearly lower than that in Embodiment 1 and Embodiment 3. In addition to the foregoing beneficial effects, the porous structure can improve an amount of the electrolyte in the material, provide abundant lithium ion diffusion channels, promote lithium ion transmission, and improve rate performance of the electrochemical cell.
3. In the third embodiment, the polymer coating layer formed on the surface of the material of the silicon-oxygen composite anode material can prevent the strong-alkaline lithium silicate and/or residual lithium in the kernel from dissolving in the water in a slurry preparation process, thereby reducing a water-soluble pH value of the material and increasing stability of the slurry. In addition, the polymer coating layer evenly wraps the material surface, suppressing volume expansion of the material in a charging and discharging process.
4. In the fourth embodiment, the polymer coating layer formed on the surface of the material of the silicon-oxygen composite anode material and in the pore can prevent the strong-alkaline lithium silicate and/or residual lithium in the kernel from dissolving in the water in a slurry preparation process, thereby reducing a water-soluble pH value of the material and increasing stability of the slurry. In addition, the polymer further infiltrates and fully fills all pores in the kernel 1 and the intermediate layer 2, suppressing volume expansion of the material in a charging and discharging process.
5. In the fifth embodiment, a polymerization of the silicon-oxygen composite anode material occurs in a hydrochloric acid solution. Hydrochloric acid can thoroughly dissolve an alkaline water-soluble component in the lithium-doped silicon oxide. This not only effectively reduces the pH value of the material, but also increases a mass proportion of an active material silicon grain after the alkaline component is dissolved, so that formed pores are automatically filled with organic small molecule reactants. After polymerization initiator is added, generated polymers are not only evenly wrapped on the surface of the material, but also filled these pores. This can effectively buffer a volume change of the material in a charging and discharging process. In this embodiment, generated polymer polypyrrole further has conductive and lithium storage activities, and has some effect on improving electrical performance of the doped silicon oxide.

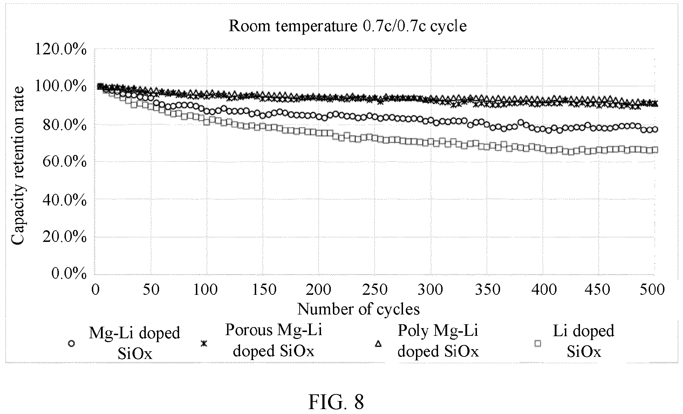

As shown in FIG. 8, testing data of the battery cycle corresponding to a standard electrochemical cell shows that, after 500-week cycle, capacity retention rates of lithium-ion batteries prepared by using the material according to Embodiment 1, Embodiment 2, Embodiment 3, and the common lithium-doped silicon oxide material without porous or gradient structure are 76%, 90%, 90%, and 66% respectively. Cycle performance of the electrochemical cell made of the gradient-structure lithium-doped silicon oxide material is clearly better than that of the electrochemical cell made of the lithium-doped silicon oxide that is not processed in Embodiment 6. In addition, after the porous structure and the polymer of the present invention are respectively used in Embodiment 2 and Embodiment 3, the cycle performance of the electrochemical cell is the best. In principle, it may be shown that after non-lithium silicate forms in situ a gradient structure and porous structure design, a lithium-doped silicon oxide material has better processing performance, lower material expansion, stronger structure stability, lower surface side reaction, and less lithium ion consumption caused by structure damage, thereby finally bringing a comprehensive improvement of cycle performance. In addition, the polymer coating has a very good slurry stability effect, effectively suppresses the expansion of the electrode plate, and improves the cycle performance of the electrochemical cell.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

The foregoing descriptions are merely specific implementations of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A silicon-oxygen composite anode material, comprising a kernel, a coating layer, and an intermediate layer located between the kernel and the coating layer; and
the intermediate layer comprises non-lithium silicate non-lithium silicate non-lithium silicate, and mass content of the non-lithium silicate in the intermediate layer progressively decreases from the intermediate layer to the kernel.

2. The silicon-oxygen composite anode material according to claim 1, wherein that mass content of the non-lithium silicate in the intermediate layer progressively decreases from the intermediate layer to the kernel comprises a gradient decrease from the intermediate layer to the kernel, wherein the gradient decrease refers to that mass proportions on a circumference with a same distance from a center of the kernel are the same, and the mass proportion decreases gradually as the distance from the center of the kernel decreases.

3. The silicon-oxygen composite anode material according to claim 2, wherein a structural formula of the non-lithium silicate is MₓSi_{y}O_{z}, and the M comprises one or a combination of Al, Ca, Mg, Be, Sr, Ba, Ti and Zr.

4. The silicon-oxygen composite anode material according to claim 3, wherein the intermediate layer of non-lithium silicate was generated in situ on the surface of the kernel, and the intermediate layer is a mixture layer generated by introducing a second-phase metal salt on the surface of the kernel.

5. The silicon-oxygen composite anode material according to claim 4, wherein the intermediate layer further comprises silicon oxide SiOₓ, wherein 0.6≤x≤2, x is an independent variable in the SiOₓ, and mass content of the silicon oxide in the intermediate layer progressively increases from the coating layer to the kernel.

6. The silicon-oxygen composite anode material according to any one of claims 1 to 4, wherein a plurality of pores are disposed on the kernel and the intermediate layer, the pore extends from a surface of the intermediate layer to the kernel, the pore forms a tapered hole shape, and an aperture of the pore gradually shrinks from the surface of the intermediate layer to the center of the inner 1.

7. The silicon-oxygen composite anode material according to claim 6, wherein both the kernel and the intermediate layer comprise a mixture of nano-silicon, silicon oxide, and lithium silicate, wherein a particle radius of the mixture is r, a depth D_{depth} of the pore is less than r, and 10 nm < D_{depth} < 500 nm.

8. The silicon-oxygen composite anode material according to claim 7, wherein the coating layer wraps the surface of the intermediate layer and fully fills all the pores.

9. The silicon-oxygen composite anode material according to any one of claims 1 to 8, wherein the kernel comprises the mixture of nano-silicon, silicon oxide, and lithium silicate, mass content of the silicon oxide in the entire kernel increases in a gradient manner in a radial direction from the coating layer to the kernel, and mass content of the lithium silicate in the kernel decreases in a gradient manner from the coating layer to the kernel.

10. The silicon-oxygen composite anode material according to claim 9, wherein the kernel further comprises one or more nonmetallic doping elements in C, H, N, B, P, S, Cl, and F, the nonmetallic doping elements are distributed in the kernel in a gradient manner, and the gradient distribution is progressively decreasing from outside of the intermediate layer to the center of the kernel.

11. The silicon-oxygen composite anode material according to any one of claims 1 to 10, wherein the coating layer is made of a carbon material, and the carbon material is purely amorphous carbon, or the carbon material is a mixture of the amorphous carbon and a carbon nanotube or graphene that are embedded in the amorphous carbon.

12. The silicon-oxygen composite anode material according to any one of claims 1 to 8, wherein the coating layer includes a coating layer formed by organic polymerization or polymer dispersion coating, and a thickness of the coating layer is 2 nm to 200 nm.

13. A lithium battery, comprising a cathode material, an electrolyte, a separator, and the silicon-oxygen composite anode material according to any one of claims 1 to 12.

14. A terminal device, comprising a charge and discharge circuit and an electric component, and further comprising the lithium battery according to claim 13, wherein the lithium battery is connected to the charge and discharge circuit, and charges or supplies power to the electric component through the charge and discharge circuit.

15. A method for fabricating a silicon-oxygen composite anode material, wherein the method comprises:
step 1: mixing silicon oxide and lithium sources evenly based on a specific proportion, then transferring the mixture to a saggar, and performing roasting in an inert atmosphere or a reducing atmosphere to obtain partial lithium-doped silicon oxide;
step 2: evenly mixing the partial lithium-doped silicon oxide and a non-lithium metal, or the partial lithium-doped silicon oxide and a non-lithium metal salt to roast; and generating in situ non-lithium silicate on a surface of the partial lithium-doped silicon oxide, to obtain a lithium-doped silicon oxide composite material distributed in a gradient manner; and
step 3: putting the lithium-doped silicon oxide composite material into an inert atmosphere furnace, pumping organic carbon source gas into the inert atmosphere furnace, and forming a carbonaceous coating layer on a surface of the lithium-doped silicon oxide composite material.

16. The silicon-oxygen composite anode material according to claim 11, wherein the lithium source is a lithium metal or a lithium salt, and the lithium salt comprises one or more of LiH, LiAlH₄, Li₂CO₃, LiNO₃, LiAc, and LiOH.

17. The silicon-oxygen composite anode material according to claim 11 or 12, wherein a structural formula of the non-lithium silicate is MₓSi_{y}O_{z}, the M comprises one or more of Al, Ca, Mg, Be, Sr, Ba, and Ti, and a molar ratio of element M and Si meets 0.01 ≤ n_{M}/n_{Si} ≤ 0.3.
